# EUROPEAN PATENT APPLICATION

(11) **EP 4 708 103 A2**
(43) Date of publication of application: **11.03.2026**
(21) Application number: 25196253.6
(22) Date of filing: 15.08.2025
(51) Int. Cl.: G06F 21/62, G06F 40/30, G06F 16/3329

(54) **LEARNING USER TASKS SUBMITTED TO ARTIFICIAL INTELLIGENCE APPLICATIONS VIA PRIVACY PRESERVING TECHNIQUES**

(30) Priority: 04.09.2024 US 202418823868
(71) Applicant: Microsoft Technology Licensing, LLC, Redmond, WA 98052 (US)
(72) Inventor: JOSHI, Dhruv, Redmond, Washington, 98052 (US); SIM, Robert, Redmond, Washington, 98052 (US); PARNIN, Christopher, Redmond, Washington, 98052 (US); YEKHANIN, Sergey, Redmond, Washington, 98052 (US); CEGIELSKI-JOHNSON, Maksymilian, Redmond, Washington, 98052 (US); LIN, Zinan, Redmond, Washington, 98052 (US)
(74) Representative: CMS Cameron McKenna Nabarro Olswang LLP

(57) **Abstract**

A data processing system implements obtaining user prompts s that include instructions to an AI application to perform one or more tasks; storing the user prompts in a prompts datastore in a secure computing environment; analyzing the user prompts using an LLM operating within the secure computing environment to generate normalized prompts based on the user prompts; extracting first n-grams from the normalized prompts using differentially private n-gram extraction that preserves user-level privacy; generating masked normalized prompts by comparing the normalized prompts with the first n-grams and replacing, with a placeholder n-gram, n-grams of the normalized prompts that do not match an n-gram of the first n-grams; extracting second n-grams from the masked normalized prompts using the differentially private n-gram extraction that preserves user-level privacy; outputting the second n-grams from the secure computing environment; and storing the second n-grams in an anonymized prompts datastore outside of the secure computing environment.

## Description

### BACKGROUND

Artificial intelligence (AI) applications are AI-powered digital assistants that can help users to perform a range of tasks. AI applications are often integrated into various applications to assist users to create, consume, and/or modify content. Users interact with these AI applications through prompts that instructs the AI application to perform specific tasks.

Developers of language models can derive useful insights into how the AI applications are being utilized by users by examining the prompts that users present to the AI applications. However, these prompts may include sensitive user data. Therefore, the prompts are typically unavailable for developers to analyze so that they can develop a better understanding of how the users are utilizing the model. Consequently, it is difficult for model developers to develop features for the AI applications that would satisfy common use cases. Hence, there is a need for improved systems and methods that provide a technical solution for providing developers of AI with insights into the types of prompts that users typically submit to these applications while preserving the privacy of the users.

### SUMMARY

An example data processing system according to the disclosure includes a processor and a memory storing executable instructions. The instructions when executed cause the processor alone or in combination with other processors to perform operations including obtaining user prompts submitted to an artificial intelligence (AI) application, wherein the user prompts comprise instructions to the AI application to perform one or more tasks, wherein each of the user prompts is associated with a customer identifier; storing the user prompts in a prompts datastore in a secure computing environment in which the user prompts are inaccessible from outside of the secure computing environment; analyzing the user prompts using a large language model (LLM) operating within the secure computing environment to generate normalized prompts based on the user prompts, the normalized prompts having a simplified format comprising words selected from among a fixed set of words; extracting first n-grams from the normalized prompts using differentially private n-gram extraction that preserves user-level privacy; generating masked normalized prompts by comparing the normalized prompts with the first n-grams and replacing, with a placeholder n-gram, n-grams of the normalized prompts that do not match an n-gram of the first n-grams; extracting second n-grams from the masked normalized prompts using the differentially private n-gram extraction that preserves user-level privacy; outputting the second n-grams from the secure computing environment; and storing the second n-grams in an anonymized prompts datastore outside of the secure computing environment.

An example data processing system according to the disclosure includes a processor and a memory storing executable instructions. The instructions when executed cause the processor alone or in combination with other processors to perform operations including obtaining user prompts submitted to an artificial intelligence (AI) application, wherein the user prompts comprise instructions to the AI application to perform one or more tasks, wherein each of the user prompts is associated with a customer identifier; storing the user prompts in a prompts datastore in a secure computing environment in which the user prompts are inaccessible from outside of the secure computing environment; analyzing the user prompts using a large language model (LLM) operating within the secure computing environment to generate normalized prompts based on the user prompts, the normalized prompts having a simplified format comprising words selected from among a fixed set of words; constructing a prompt to the LLM to generate candidate privacy preserving prompts, the prompt including desired attributes of the candidate privacy preserving prompts that have not been derived from the user prompts; providing the prompt to the LLM to obtain the candidate privacy preserving prompts; determining similarity metrics representing a closest candidate privacy preserving prompt for each of the normalized prompts; introducing calibrated noise into the similarity metrics to introduce differential privacy to the similarity metrics; selecting a predetermined number of candidate privacy preserving prompts that are most similar to the normalized prompts based on the similarity metrics; outputting the predetermined number of candidate privacy preserving prompts from the secure computing environment; and storing the candidate privacy preserving prompts in an anonymized prompts datastore outside of the secure computing environment. In some implementations, prior to outputting the predetermined number of candidate privacy preserving prompts, the data processing system performs operations including iteratively performing operations of: constructing a prompt to the LLM to analyze the selected candidate privacy preserving prompts to generate variations of each of the selected candidate privacy preserving prompts; determining seconds similarity metrics representing a closest candidate privacy preserving prompt for each of the variations; introducing calibrated noise into the second similarity metrics to introduce differential privacy to the second similarity metrics; selecting a predetermined number of variations that are most similar to the normalized prompts based on the similarity metrics; and outputting the predetermined number of variations as the selected candidate privacy preserving prompts.

An example data processing system according to the disclosure includes a processor and a memory storing executable instructions. The instructions when executed cause the processor alone or in combination with other processors to perform operations including obtaining first user prompts submitted to an artificial intelligence (AI) application, wherein the first user prompts comprise instructions to the AI application to perform one or more tasks; analyzing the first user prompts using a first privacy preserving analysis pipeline implemented in a first secure computing environment to obtain first privacy preserving prompt information; obtaining second privacy preserving prompt information from a second privacy preserving analysis pipeline implemented in a second secure computing environment in response to the second privacy preserving analysis pipeline analyzing second user prompts to the AI application; aggregating the first privacy preserving prompt information and the second privacy preserving prompt information to generate aggregated privacy preserving prompt information; and storing the aggregated privacy preserving prompt information in an anonymized prompts datastore outside of the first secure computing environment and the second secure computing environment.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

The drawing figures depict one or more implementations in accord with the present teachings, by way of example only, not by way of limitation. In the figures, like reference numerals refer to the same or similar elements. Furthermore, it should be understood that the drawings are not necessarily to scale.
FIG. 1 is a diagram of an example computing environment in which the techniques for extracting aggregate patterns from user interactions with an AI application described herein are implemented.
FIG. 2 is a diagram showing an example implementation of the privacy preserving analysis pipeline shown in FIG. 1.
FIG. 3 is a diagram showing another example implementation of the privacy preserving analysis pipeline shown in FIG. 1.
FIG. 4 is a diagram showing an example implementation that includes multiple privacy preserving analysis pipelines.
FIG. 5A is a flow chart of an example privacy preserving process for learning about tasks submitted to an artificial intelligence model according to the techniques disclosed herein.
FIG. 5B is a flow chart of another example privacy preserving process for learning about tasks submitted to an artificial intelligence model according to the techniques disclosed herein.
FIG. 5C is a flow chart of another example privacy preserving process for learning about tasks submitted to an artificial intelligence model according to the techniques disclosed herein.
FIG. 6 is a block diagram showing an example software architecture, various portions of which may be used in conjunction with various hardware architectures herein described, which may implement any of the described features.
FIG. 7 is a block diagram showing components of an example machine configured to read instructions from a machine-readable medium and perform any of the features described herein.

### DETAILED DESCRIPTION

Systems and methods for extracting aggregate patterns from user interactions with an artificial intelligence (AI) application are provided that preserves the privacy of the user interactions by leveraging a large language model (LLM). These techniques provide a technical solution to the technical problem of understanding user needs with respect to the AI application without revealing confidential information included in the user prompts that must be protected. The techniques herein provide a privacy preserving analysis pipeline that utilizes an LLM and privacy preserving techniques, such as but not limited to differential privacy or private evolution, to generate privacy preserving summaries of the user prompts. The privacy preserving analysis pipeline stores the user prompts within a secure boundary and transforms the user prompts using the LLM implemented within the secure boundary to a normalized format based on a fixed set of words. The normalized prompts are maintained within the secure boundary and are subjected to a differential privacy, private evolution, other privacy preserving technique to generate the privacy preserving summaries of the user prompts. The privacy preserving version of the user prompts can be aggregated based on semantic similarity. A technical benefit of this approach is that the aggregated output from the privacy preserving analysis pipeline provides valuable insights into user interactions with the AI application without disclosing sensitive customer information. These and other technical benefits of the techniques disclosed herein will be evident from the discussion of the example implementations that follow.

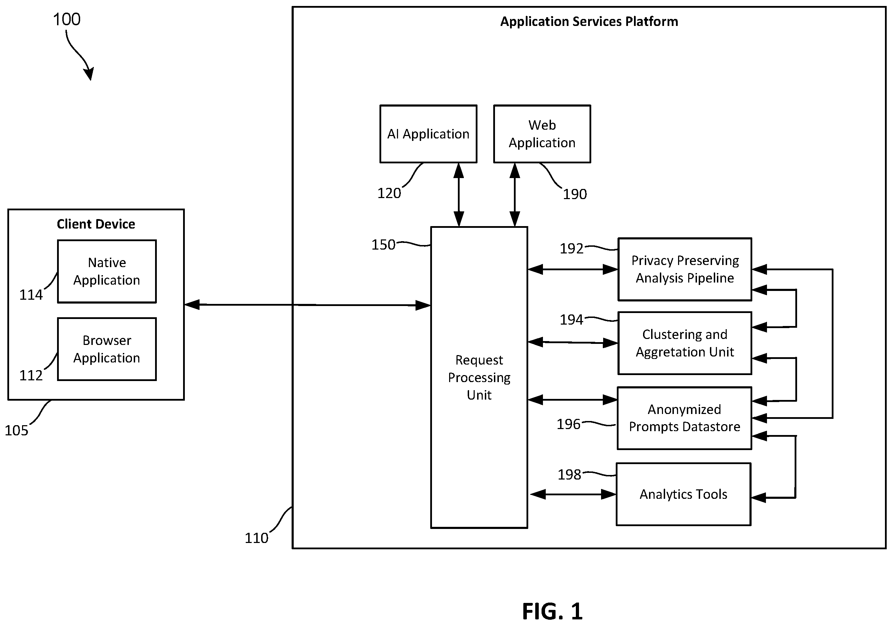

FIG. 1 is a diagram of an example computing environment 100 in which the techniques described herein are implemented. The example computing environment 100 includes a client device 105 and an application services platform 110. The application services platform 110 provides one or more cloud-based applications and/or provides services to support one or more web-enabled native applications on the client device 105. These applications may include but are not limited to design applications, communications platforms, visualization tools, and collaboration tools for collaboratively creating visual representations of information, and other applications for consuming and/or creating electronic content. The client device 105 and the application services platform 110 communicate with each other over a network (not shown). The network may be a combination of one or more public and/or private networks and may be implemented at least in part by the Internet.

The application services platform 110 also provides an AI application 120 that provides a digital assistant that can perform various tasks in response to user prompts. The AI application 120 can be integrated with one or more of the cloud-based applications and/or web-based applications supported by the application services platform 110. The user prompts can request that the AI application 120 perform various actions in these applications including creating, consuming, and/or modifying content. The application services platform 110 provides a privacy preserving analysis pipeline 192, discussed in detail below, that extracts aggregate patterns from user interactions with the AI application 120 that preserves the privacy of the user interactions by leveraging an LLM. The AI application 120 is not limited to particular architecture. Any architecture that receives natural language prompts from users and performs various actions in response to those prompts can be utilized.

The request processing unit 150 receives requests from an application implemented by the native application 114 of the client device 105 and/or the web application 190 of the application services platform 110. The native application 114 and/or the web application 190 provide a user interface that enables users to input natural language prompts requesting that the AI application 120 perform various tasks, such as but not limited to creating, consuming, and/or modifying content. The request processing unit 150 also coordinates communication and exchange of data among components of the application services platform 110 as discussed in the examples which follow.

The privacy preserving analysis pipeline 192 provides a technical solution to the technical problem of understanding user needs with respect to the AI application without revealing confidential information included in the user prompts that must be protected. The privacy preserving analysis pipeline 192 is a pipeline architecture that analyzes user prompts that are submitted to the AI application 120 and generates privacy preserving summaries of those user prompts that can provide developers of the AI application 120 with insights into how users are utilizing the AI application 120. The developers can utilize this information to improve the AI application 120 to improve the performance of the AI application 120 and/or to add features and/or functionality to the AI application 120 based on how users are utilizing the AI application 120. These usage patterns can change over time, and the privacy preserving summaries of the user prompts can provide valuable insights into these changing usage patterns. The privacy preserving analysis pipeline 192 operates within a secure computing boundary that ensures that the user prompts are stored and analyzed in computing environment. The user prompts are inaccessible from outside of the secure computing environment and cannot be exported from the secure computing environment. The privacy preserving analysis pipeline 192 utilizes an LLM operating within the secure computing environment to rephrase the user prompts into a simplified, normalized format with a fixed set of words. The privacy preserving version of the user prompts are then generated from these normalized prompts using various privacy preserving techniques, such as but not limited to differential privacy and private evolution. The clustering and aggregation unit 194 clusters the privacy preserving summaries of the user prompts output by the privacy preserving analysis pipeline 192 according to semantic similarity and stores the aggregated prompts in the anonymized prompts datastore 196.

The anonymized prompts datastore 196 is a persistent datastore in a memory of the application services platform 110 that is located outside of the secure boundary of the secure computing environment. The privacy preserving summaries of the user prompts have been processed to ensure that customer specific information is not included in the privacy preserving summaries of the user prompt. The privacy preserving summaries of the user prompts can then be analyzed by developers of the AI application 120 to provide insights into how the users are utilizing the AI application 120. In some implementations, the analytics tools 198 provide tools for analyzing and/or generating visualizations of the privacy preserving summaries of the user prompt that help the developers better understand how users are interacting with the AI application 120.

The client device 105 is a computing device that may be implemented as a portable electronic device, such as a mobile phone, a tablet computer, a laptop computer, a portable digital assistant device, a portable game console, and/or other such devices in some implementations. The client device 105 may also be implemented in computing devices having other form factors, such as a desktop computer, vehicle onboard computing system, a kiosk, a point-of-sale system, a video game console, and/or other types of computing devices in other implementations. While the example implementation illustrated in FIG. 1 includes a single client device, other implementations may include a different number of client devices that utilize service provided by the application services platform 110.

The client device 105 includes a native application 114 and a browser application 112. The native application 114 is a web-enabled native application, in some implementations, that enables users to view, create, and/or modify electronic content. The web-enabled native application utilizes services provided by the application services platform 110 including but not limited to creating, viewing, and/or modifying various types of electronic content. In other implementations, the browser application 112 is used for accessing and viewing web-based content provided by the application services platform 110. In such implementations, the application services platform 110 implements one or more web applications, such as the web application 190, that enables users to view, create, and/or modify electronic content and to obtain template recommendations for creating and/or modifying the electronic content. The native application 114 and/or the web application 190 can provide a user interface or users interfaces that enable the user to interact with the AI application 120 according to the various techniques disclosed herein. The application services platform 110 supports both web-enabled native applications and a web application in some implementations, and the users may choose which approach best suits their needs.

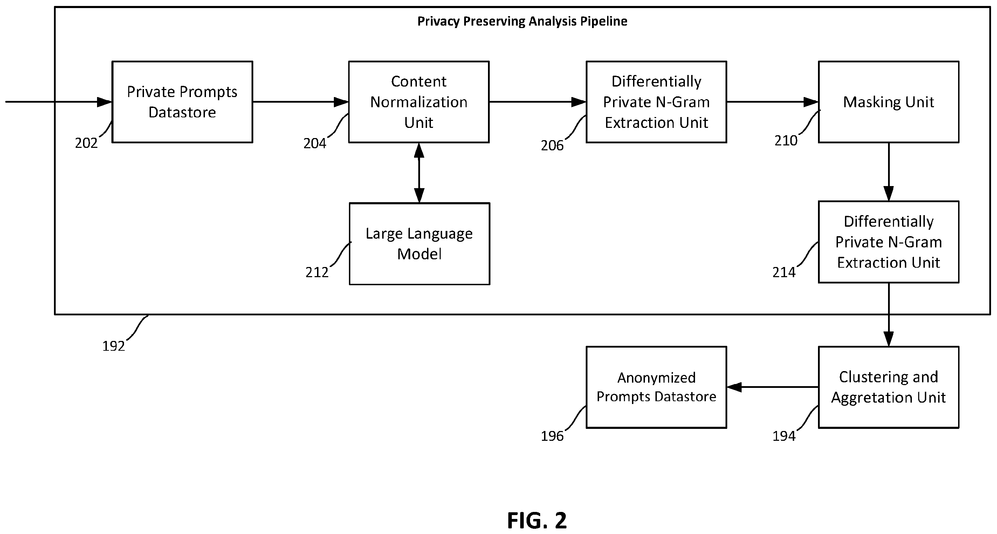

FIG. 2 is a diagram showing another example implementation of the privacy preserving analysis pipeline 192 shown in FIG. 1 which implements a technical solution to the technical problem of understanding user needs with respect to the AI application without revealing confidential information included in the user prompts that must be protected. FIG. 2 shows an example of the privacy preserving analysis pipeline 192 that implements an LLM and differential privacy techniques to generate privacy preserving prompt information from user prompts. The implementation of the privacy preserving analysis pipeline 192 shown in FIG. 2 includes a private prompts datastore 202, a content normalization unit 204, an LLM 212, differentially private n-gram extraction unit 206, masking unit 210, differentially private n-gram extraction unit 214.

The private prompts datastore 202 stores a copy of the user prompts that have been submitted to the AI application 120. The request processing unit 150 can receive the user prompts from the native application 114 and/or the web application 190 and provide the user prompts to the privacy preserving analysis pipeline 192 for analysis. As discussed above, the privacy preserving analysis pipeline 192 is implemented within a secure boundary within the application services platform 110. The data and processed executed within the secure boundary are not accessible from outside of the secure boundary to ensure that any user prompts that include sensitive information cannot be disclosed outside of the secure computing environment. The user prompt is also associated with a customer identifier which is also stored in private prompts datastore 202. The customer identifier can represent an individual user or a collection of users associated with a single paying customer. The customer identifier can be used by the privacy preserving analysis pipeline 192 when aggregating data and applying privacy protections to the data as discussed in the examples which follow.

In some implementations, the user prompts may be associated with other data that is also stored in the private prompts datastore 202. For example, the user prompt may be associated with an electronic document, an image, a video, and/or other types of electronic content. In such instances, the LLM 212 can be used to analyze the other data to obtain a text summary of the other data. The other data and the text summary are stored in the private prompts datastore 202 and associated with the user prompt. The private prompts datastore 202 can use the other data and/or the text summary of the other data when generating the privacy preserving prompt information.

The private prompts datastore 202 retains the user prompts, other data, and text summaries for a predetermined period of time before deleting this data from the private prompts datastore 202. The predetermined period of time is determined by data retention policies implemented by the customers in some implementations. For instance, enterprise customers may specify time limits that the application services platform 110 can retain sensitive data for the enterprise users, such as the user prompts and other data, even though this data is retained within a secure boundary. Furthermore, the data retention time may be defined based on local and/or regional data retention regulations which place limits on how long sensitive customer data can be retained.

The privacy preserving analysis pipeline 192 periodically processes the user prompts that have been added to the private prompts datastore 202 periodically in some implementations. For instance, the privacy preserving analysis pipeline 192 can process the user prompts and/or other data received on a daily basis, weekly basis, or a monthly basis. The frequency at which the privacy preserving analysis pipeline 192 processes the user prompts and/or other data can be selected based on the data retention policies associated with the data to ensure that the privacy preserving analysis pipeline 192 processes the data before the data must be deleted from the private prompts datastore 202.

The content normalization unit 204 converts the user prompts to a simplified and normalized format that is based on a fixed set of words. For instance, the content normalization unit 204 generates normalized prompts that have a "VERB - OBJECT - DOMAIN" format. In a non-limiting example, the user enters the user prompt "please create a resume for a product manager position at a healthcare organization." The normalized version of this example user prompt could be "create a resume for a product manager" or a similar rephrasing of the user prompt. The content normalization unit 204 constructs a prompt instructing the LLM 212 to rephrase a user prompt into the simplified and normalized format the utilizes the fixed set of words. The LLM 212 is a large language model that is implemented within the secure boundary of the secure computing environment in which the privacy preserving analysis pipeline 192 is implemented. The LLM 212 is implemented within the secure computing environment so that no prompts comprising sensitive user data from the user prompts is leaked from the secure computing environment. The LLM 212 can be implemented utilizing various type of language models. These models can include but are not limited to Generative Pre-trained Transformer 3 (GPT-3) or GPT-4 models. Other model architectures can be utilized in other implementations.

The differentially private n-gram extraction unit 206 analyzes the normalized prompts output by the content normalization unit 204 to extract n-grams from the normalized prompts. An n-gram is a sequence of words extracted from the normalized prompts. In a non-limiting example, the n-gram "create a resume" is extracted from the normalized prompt "create a resume for a product manager." The length of the n-grams may vary depending upon the implementation. Furthermore, the differentially private n-gram extraction unit 206 can utilize various n-gram extraction techniques to extract the n-grams and is not limited to a specific n-gram extraction technique. The differentially private n-gram extraction unit 206 determines the frequency distribution of the n-grams aggregated based on the customer identifier associated with the user prompt. The differentially private n-gram extraction unit 206 utilizes differential privacy techniques to inject noise into the frequency counts to protect the privacy of the customers. A technical benefit of this approach is that customer identifiable sensitive information included in the user prompts is not leaked by the privacy preserving analysis pipeline 192. The differentially private n-gram extraction unit 206 determines whether the frequency counts associated with a user or enterprise satisfies a minimum frequency threshold that is policy based. The minimum frequency threshold is set by a policy to a specific frequency high enough to provide strong guarantees around privacy of each customer. The differentially private n-gram extraction unit 206 discards the n-grams associated with an individual customer or enterprise customer in response to the frequency counts for a particular n-gram failing to satisfy the minimum frequency threshold.

The masking unit 210 performs a masking operation on the n-grams output by the differentially private n-gram extraction unit 206. The masking unit 210 compares the n-grams output by the differentially private n-gram extraction unit 206 with the normalized prompts output by the content normalization unit 204. Where there is match between the n-gram and the normalized prompt, the n-gram is kept as is and no masking is required. However, if there is a mismatch between the n-gram and the normalized prompt, everything from the normalized prompt that is not match for the n-gram is replaced with a placeholder holder tag, such as but not limited to a "<blank>" tag or an "<unknown>" tag. For instance, the normalized prompt "create a resume for secret role at Contoso Inc" could be masked to "create a resume for

<blank>". The masking unit 210 performs this comparison and masking process for each of the normalized prompts. The masked normalized prompts output by the masking unit 210 are provided to the differentially private n-gram extraction unit 214 for additional processing.

The differentially private n-gram extraction unit 214 operates similar to the differentially private n-gram extraction unit 206. The differentially private n-gram extraction unit 214 applies the same differential privacy techniques to the masked normalized prompts to extract second n-grams. This approach can increase the yield of extracted topics. The differentially private n-gram extraction unit 214. While the example shown in FIG. 2 includes two iterations, other implementations can perform additional iterations of the masking and extracting operations multiple times.

The clustering and aggregation unit 194 receives the second n-grams output by the differentially private n-gram extraction unit 214 and aggregates the second n-grams based on semantic similarity. The semantic similarity indicates whether the n-grams have a similar meaning. The clustering and aggregation unit 194 aggregates to the n-grams to provide a high-level overview of user behavior. The size of the clusters or groupings of n-grams are indicative of greater user interest in a particular type of prompt to the AI application 120. This information can provide the developers with valuable insights into how the users are utilizing the AI application 120 while preserving individual privacy of the users. The clustering and aggregation unit 194 stores the aggregated n-gram information to the anonymized prompts datastore 196. The developers can utilize this data directly or further analyze it using the analytics tools 198. The information derived from this analysis can be used to improve the functionality of AI application 120.

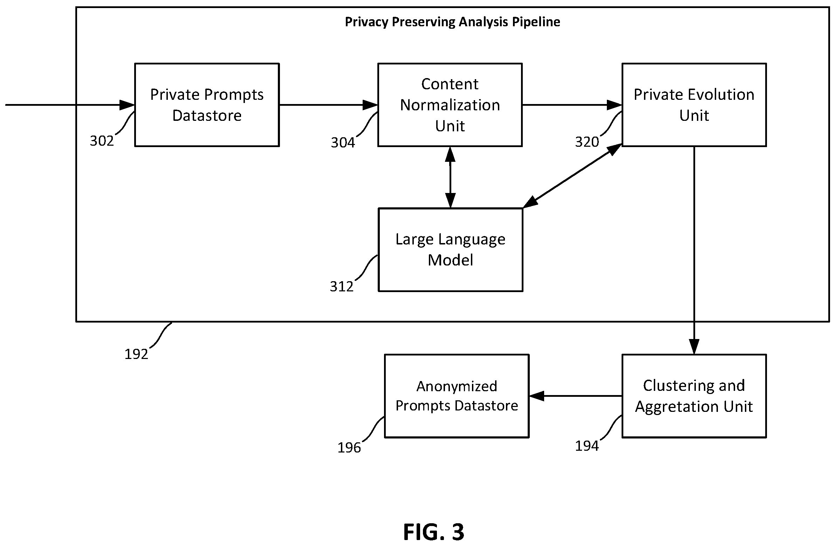

FIG. 3 is a diagram showing another example implementation of the privacy preserving analysis pipeline 192 shown in FIG. 1 which implements a technical solution to the technical problem of understanding user needs with respect to the AI application without revealing confidential information included in the user prompts that must be protected. FIG. 3 shows an example of the privacy preserving analysis pipeline 192 that implements and LLM private evolution techniques to generate privacy preserving prompt information from user prompts. The implementation of the privacy preserving analysis pipeline 192 shown in FIG. 3 includes a private prompts datastore 302, a content normalization unit 304, an LLM 312, and private evolution unit 320. The private prompts datastore is similar to the private prompts datastore 202 shown in FIG. 2. The LLM 312 is similar to the LLM 212 shown in FIG. 2. The content normalization unit 304 is similar to the content normalization unit 204 shown in FIG. 2. An example of the private evolution technique implemented by the privacy preserving analysis pipeline 192 are discussed in "Differentially Private Synthetic Data via Foundation Model APIs 2: Text" by Xie et al., March 2024, which is incorporated herein by reference.

The content normalization unit 304 converts the user prompts to a simplified and normalized format as discussed above with respect to FIG. 2. The private evolution unit 320 analyzes the normalized prompts output by the content normalization unit 304 to generate privacy preserving prompts which are privacy preserving summaries of the user prompts from the private prompts datastore 302. The private evolution unit 320 constructs a prompt to the LLM to generate candidate privacy preserving prompts. The prompt specifies desired attributes of the candidate privacy preserving prompts that have not been derived from the user prompts. The candidate privacy preserving prompts are generated independently from the normalized user prompts to ensure that no sensitive user data leaks from the secure boundary of the secure computing environment. The candidate privacy preserving prompts are then "evolved" by the private evolution unit 320 so that the candidate privacy preserving prompts become semantically similar to the normalized user prompts. A technical benefit of this approach is that the candidate privacy preserving prompts are not derived from the user prompts or normalized user prompts. Therefore, no customer identifiable sensitive information is leaked by the privacy preserving analysis pipeline 192.

The private evolution unit 320 determines similarity metrics representing a closest candidate privacy preserving prompt for each of the normalized prompts and introduces calibrated noise into the similarity metrics to introduce differential privacy to the similarity metrics. The private evolution unit 320 determines the similarity metrics by determining embeddings for the normalized prompts and for the candidate privacy preserving prompts using an embeddings model. The embeddings model converts a textual input to a vector of numerical values that provides a numerical representation of the textual input. The private evolution unit 320 can utilize the Sentence Transformers (SBERT) model to generate the embeddings in some implementations. However, the private evolution unit 320 can utilize other models to generate the embeddings in other implementations. The private evolution unit 320 compares the embeddings of the normalized prompts with the embeddings of the candidate privacy preserving prompts to determine an embeddings distance between each of the normalized prompts and each of the candidate privacy preserving prompts. The embedding distance between a respective normalized prompt and a respective candidate privacy preserving prompt represents the similarity of the respective normalized prompt and the respective candidate privacy preserving prompt. The private evolution unit 320 adds Gaussian noise and/or other calibrated noise to the embeddings distances as a differential privacy guarantee. In some implementations, the embeddings distances are represented as a histogram and the Gaussian noise and/or other calibrated noise is added to each bin of the histogram to introduce the noise. The private evolution unit 320 performs multiple iterations of the determining of the similarity metrics, introducing the calibrated noise into the similarity metrics, and selecting the predetermined number of candidate privacy preserving prompts. The private evolution unit 320 tracks the accrued privacy loss for each iteration.

The private evolution unit 320 selects a predetermined number of candidate privacy preserving prompts that are most similar to the normalized prompts based on the similarity metrics and outputting the predetermined number of candidate privacy preserving prompts from the secure computing environment. The candidate privacy preserving prompts are stored in the anonymized prompts datastore 196 where the privacy preserving data can be analyzed using the analytics tools 198 and/or other analytics software.

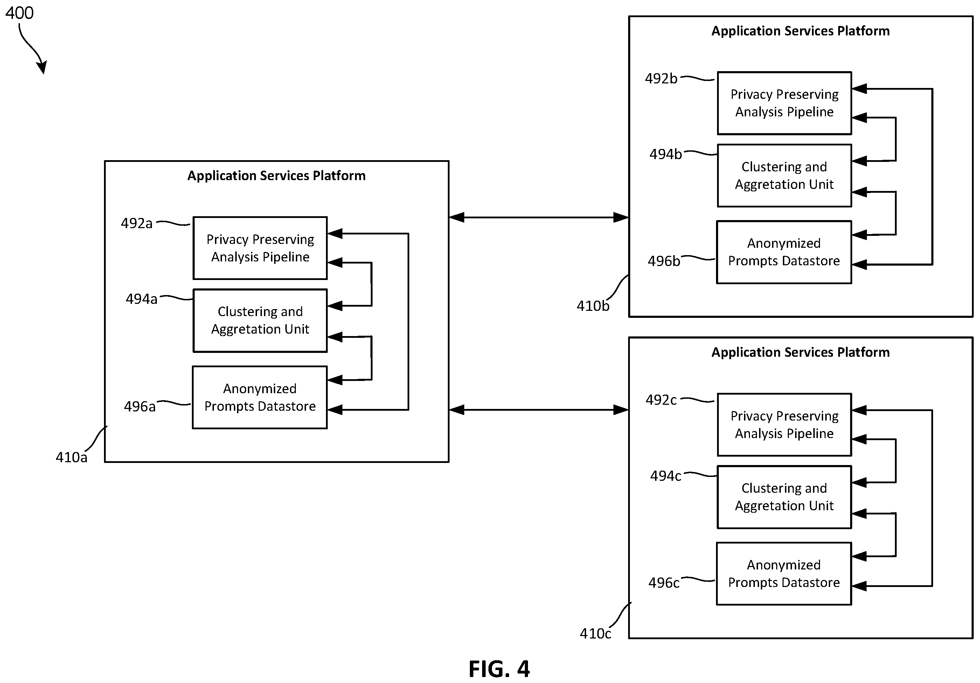

FIG. 4 is a diagram showing an example computing environment 400 that includes multiple privacy preserving analysis pipelines 492a-492c. In the example computing environment 400, there are three implementations of the application services platform 410a, 410b, and 410c. Each of these implementations is similar to the application services platform 110 discussed in the preceding examples. These separate application services platform implementations can be located in different countries or regions that have different data retention and data privacy regulations. In such implementations, the user prompts comprising sensitive data would not be permitted to be sent or stored outside of a specific region. However, the privacy preserving prompt information does not include any sensitive information and can be sent outside of this region and aggregated with privacy preserving prompt information determined in other regions.

In the example implementation shown in FIG. 4, the privacy preserving analysis pipeline 492a outputs privacy protecting version of the user prompts to the clustering and aggregation unit 494a. The clustering and aggregation unit 494a aggregates the privacy protecting version of the prompts and stores the aggregated data in the anonymized prompts datastore 496a. The privacy preserving analysis pipeline 492b outputs privacy protecting version of the user prompts to the clustering and aggregation unit 494b. The clustering and aggregation unit 494b aggregates the privacy protecting version of the prompts and stores the aggregated data in the anonymized prompts datastore 496b. The privacy preserving analysis pipeline 492c outputs privacy protecting version of the user prompts to the clustering and aggregation unit 494c. The clustering and aggregation unit 494c aggregates the privacy protecting version of the prompts and stores the aggregated data in the anonymized prompts datastore 496c. The application services platform 410b can then send the aggregated privacy protecting version of the prompts from the anonymized prompts datastore 496b to the clustering and aggregation unit 494a to be aggregated with the anonymized prompts output by the privacy preserving analysis pipeline 492a. Similarly, application services platform 410c can then send the aggregated privacy protecting version of the prompts from the anonymized prompts datastore 496c to the clustering and aggregation unit 494a to be aggregated with the anonymized prompts output by the privacy preserving analysis pipeline 492a. A technical benefit of this approach is that the user prompts that include sensitive information remain behind the security boundary of the secure computing environments of the respective privacy preserving analysis pipeline. The privacy preserving summaries of these users prompts can then be aggregated across the privacy preserving analysis pipelines.

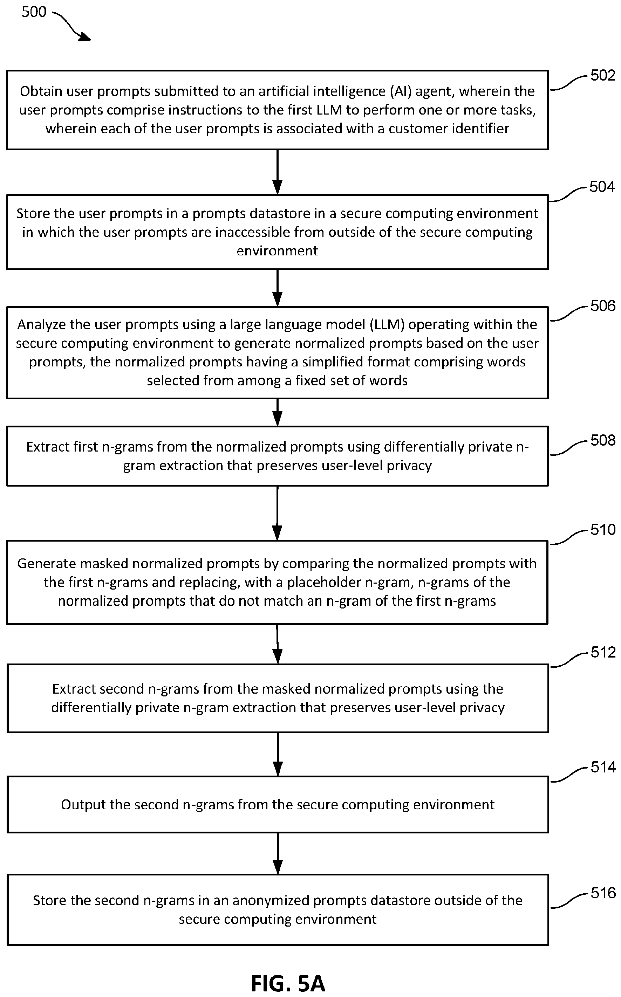

FIG. 5A is a flow chart of another example process 500 for privacy preserving process for learning about tasks submitted to an artificial intelligence model according to the techniques disclosed herein. The process 500 can be implemented by the privacy preserving analysis pipeline 192 of the application services platform 110 as discussed in the preceding examples. FIG. 2 shows an example of the privacy preserving analysis pipeline 192 that implements differential privacy techniques to generate privacy preserving prompt information from user prompts.

The process 500 includes an operation 502 of obtaining user prompts submitted to an AI application 120. The user prompts include instructions to the AI application to perform one or more tasks. As discussed in the preceding examples, users can enter prompts for the AI application 120 via a user interface provided by the native application 114 and/or the web application 190. The user prompts can be received from multiple users from multiple client devices. Each of the user prompts is associated with a customer identifier.

The process 500 includes an operation 504 of storing the user prompts in the private prompts datastore 202 in a secure computing environment in which the user prompts are inaccessible from outside of the secure computing environment. As discussed in the preceding examples, the privacy preserving analysis pipeline 192 is implemented behind a secure boundary that prevents the user prompts stored therein from being accessed from outside of the secure computing environment.

The process 500 includes an operation 506 of analyzing the user prompts using an LLM 212 operating within the secure computing environment to generate normalized and simplified prompts based on the user prompts, the normalized prompts having a simplified format comprising words selected from among a fixed set of words. The privacy preserving analysis pipeline 192 stores the normalized prompts in the private prompts datastore 202 and associates each of the normalized prompts with the respective user prompts from which the normalized prompt is derived.

The process 500 includes an operation 508 of extracting first n-grams from the normalized prompts using differentially private n-gram extraction that preserves user-level privacy. The differentially private n-gram extraction unit 206 of the privacy preserving analysis pipeline 192 extracts the first n-grams from the normalized prompts. The differentially private n-gram extraction unit 206 aggregates the first n-grams based on the customer identifier associated with the user prompts from which the first n-grams were generated in some implementations, and discards, from the first n-grams, those n-grams having a frequency that does not satisfy a minimum frequency threshold. The minimum frequency threshold is set by a policy to a specific frequency high enough to provide strong guarantees around privacy of each individual customer.

The process 500 includes an operation 510 of generating masked normalized prompts by comparing the normalized prompts with the first n-grams and replacing, with a placeholder n-gram, n-grams of the normalized prompts that do not match an n-gram of the first n-grams. The masking unit 210 of the privacy preserving analysis pipeline 192 generates the masked normalized prompts.

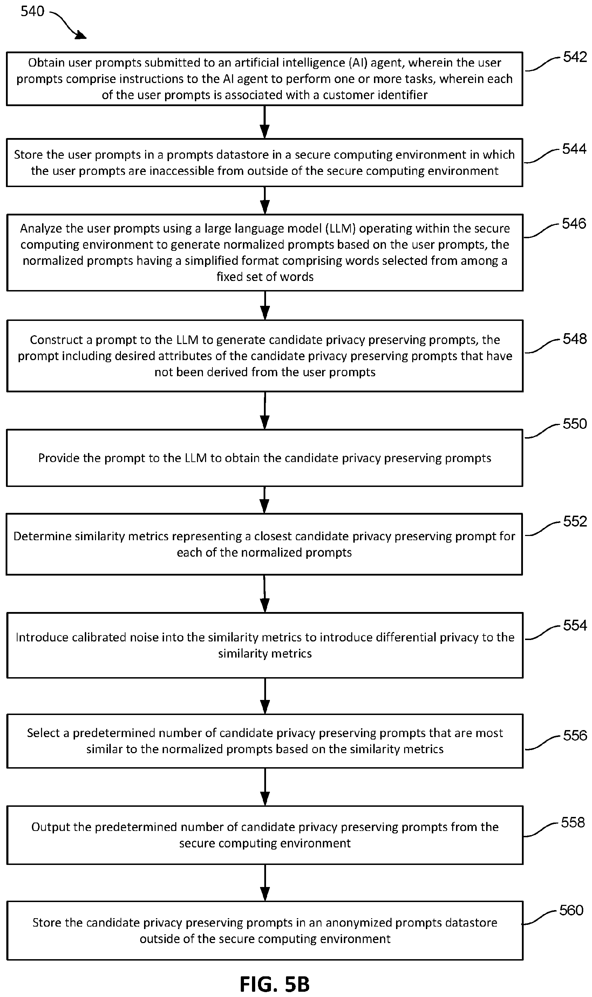

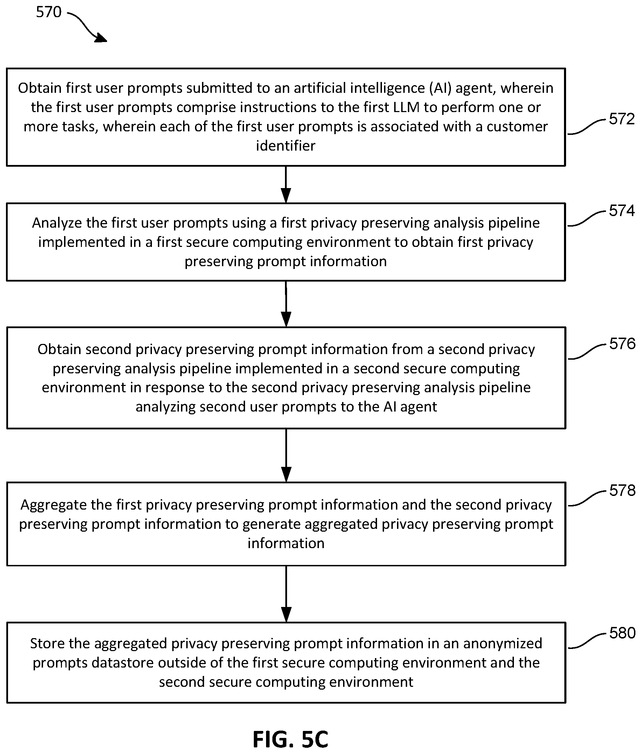

The process 500 includes an operation 512 of extracting second n-grams from the masked normalized prompts using the differentially private n-gram extraction that preserves user-level privacy. The differentially private n-gram extraction unit 214 performs a second extraction of n-grams from the masked normalized prompts in order to increase the yield of the extracted topics that will be included in the privacy preserving summaries of the user prompts. The differentially private n-gram extraction unit 214 aggregates the second n-grams based on the customer identifier associated with the user prompts from which the second n-grams were generated. And discards, from the second n-grams, those n-grams having a frequency that does not satisfy a minimum frequency threshold. A technical benefit of this approach is that it provides further strong guarantees around privacy of the individual customers. While the example shown in FIG. 5 includes two iterations, other implementations can perform additional iterations of the masking and extracting operations multiple times.

The process 500 includes an operation 514 of outputting the second n-grams from the secure computing environment. The clustering and aggregation unit 194 receives the second n-grams output by the differentially private n-gram extraction unit 214 and aggregates the second n-grams based on semantic similarity.

The process 500 includes an operation 516 of storing the second n-grams in an anonymized prompts datastore 196 outside of the secure computing environment. The clustering and aggregation unit 194 stores the aggregated n-grams representing privacy preserving summaries of the user prompts.

FIG. 5B is a flow chart of another example process 540 for privacy preserving process for learning about tasks submitted to an artificial intelligence model according to the techniques disclosed herein. The process 540 can be implemented by the privacy preserving analysis pipeline 192 of the application services platform 110 as discussed in the preceding examples. FIG. 3 shows an example of the privacy preserving analysis pipeline 192 that implements private evolution techniques to generate privacy preserving prompt information from user prompts.

The process 540 includes an operation 542 of obtaining user prompts submitted to an artificial intelligence (AI) application. The user prompts include instructions to the AI application to perform one or more tasks. As discussed in the preceding examples, users can enter prompts for the AI application 120 via a user interface provided by the native application 114 and/or the web application 190. The user prompts can be received from multiple users from multiple client devices. Each of the user prompts is associated with a customer identifier.

The process 540 includes an operation 544 of storing the user prompts in the private prompts datastore 302 in a secure computing environment in which the user prompts are inaccessible from outside of the secure computing environment. As discussed in the preceding examples, the privacy preserving analysis pipeline 192 is implemented behind a secure boundary that prevents the user prompts stored therein from being accessed from outside of the secure computing environment.

The process 540 includes an operation 546 of analyzing the user prompts using an LLM 312 operating within the secure computing environment to generate normalized prompts based on the user prompts, the normalized prompts having a simplified format comprising words selected from among a fixed set of words. The privacy preserving analysis pipeline 192 stores the normalized prompts in the private prompts datastore 302 and associates each of the normalized prompts with the respective user prompts from which the normalized prompt is derived.

The process 540 includes an operation 548 of constructing a prompt to the LLM to generate candidate privacy preserving prompts, the prompt including desired attributes of the candidate privacy preserving prompts that have not been derived from the user prompts and an operation 550 of providing the prompt to the LLM to obtain the candidate privacy preserving prompts. The prompt includes desired attributes of the candidate privacy preserving prompts that have not been derived from the user prompts. The content normalization unit 304 constructs the prompt to the LLM so that the prompt does not include any private information derived from the user prompts. A technical benefit of this approach is that the candidate privacy preserving prompts cannot inadvertently leak confidential information from the security boundary.

The process 540 includes an operation 552 of determining similarity metrics representing a closest candidate privacy preserving prompt for each of the normalized prompts. The private evolution unit 320 calculates the similarity metrics using the techniques discussed in the preceding examples.

The process 540 includes an operation 554 of introducing calibrated noise into the similarity metrics to introduce differential privacy to the similarity metrics. The private evolution unit 320 introduces calibrated noise into the similarity metrics because the similarity metrics are determined based in part on the user prompts. The introduction of the noise helps to preserve privacy.

The process 540 includes an operation 556 of selecting a predetermined number of candidate privacy preserving prompts that are most similar to the normalized prompts based on the similarity metrics and an operation 558 of outputting the predetermined number of candidate privacy preserving prompts from the secure computing environment. The private evolution unit 320 outputs the candidate privacy preserving prompts to the clustering and aggregation unit 194. The clustering and aggregation unit 194 aggregates the candidate privacy preserving prompts based on semantic similarity.

Prior to outputting the candidate privacy preserving prompts in operation 558, the private evolution unit 320 can make a determination whether to halt processing and output the candidate privacy preserving prompts or to perform one or more additional iterations of the processing. In these additional iteratives of processing, the selected predetermined privacy preserving prompts are submitted to the LLM 312 with a prompt instructing the LLM 312 to generate variations of the selected predetermined privacy preserving prompts and/or to paraphrase the selected predetermined privacy preserving prompts to generate a new set of candidate predetermined privacy preserving prompts. The private evolution unit 320 then performs operations 552, 554, and 556 on the new set of candidate predetermined privacy preserving prompts. The specific number of iterations that are performed by the private evolution unit 320 may vary from implementation to implementation.

The process 540 includes an operation 560 of storing the candidate privacy preserving prompts in an anonymized prompts datastore outside of the secure computing environment. The clustering and aggregation unit 194 stores the aggregated privacy preserving prompts representing privacy preserving summaries of the user prompts.

FIG. 5C is a flow chart of another example process 570 for a privacy preserving process for learning about tasks submitted to an artificial intelligence model according to the techniques disclosed herein. The process 570 can be implemented by the privacy preserving analysis pipeline 192 of the application services platform 110 as discussed in the preceding examples. FIG. 4 shows an example in which privacy preserving analysis pipelines 492a-492c are implemented on separate application services platforms 410a-410c and the privacy preserving analysis pipeline 492a and/or the application services platform 410a is configured to receive and aggregate privacy preserving prompt information from the privacy preserving analysis pipelines 492b and 492c with the privacy preserving prompt information determined by the privacy preserving analysis pipeline 492a.

The process 570 includes an operation 572 of obtaining first user prompts submitted to an AI application 120. The first user prompts include instructions to the AI application 120 to perform one or more tasks. As discussed in the preceding examples, users can enter prompts for the AI application 120 via a user interface provided by the native application 114 and/or the web application 190. The user prompts can be received from multiple users from multiple client devices. Each of the user prompts is associated with a customer identifier.

The process 570 includes an operation 574 of analyzing the first user prompts using a first privacy preserving analysis pipeline 492a implemented in a first secure computing environment to obtain first privacy preserving prompt information. The first privacy preserving analysis pipeline 492a analyzes the first user prompts according to the privacy preserving techniques discussed in the preceding examples.

The process 570 includes an operation 576 of obtaining second privacy preserving prompt information from a second privacy preserving analysis pipeline 492b implemented in a second secure computing environment in response to the second privacy preserving analysis pipeline analyzing second user prompts to the AI application. As discussed in the preceding examples, multiple privacy preserving analysis pipeline can be implemented in instances in which the data processing systems have different privacy restrictions imposed on the data stored therein. For instance, each of the privacy preserving analysis pipelines may be implemented on different instances of the application services platform 110 that are located in different countries or regions that have different data retention and data privacy regulations. In such implementations, the user prompts comprising sensitive data would not be permitted to be sent or stored outside of a specific region. However, the privacy preserving prompt information does not include any sensitive information and can be sent outside of this region and aggregated with privacy preserving prompt information determined in other regions.

The process 570 includes an operation 578 of aggregating the first privacy preserving prompt information and the second privacy preserving prompt information to generate aggregated privacy preserving prompt information. The privacy preserving prompt information can be aggregated across multiple regions to provide an insight into how the AI application 120 is being utilized by users across these regions without compromising user privacy or violating a data privacy or data retention regulations.

The process 570 includes an operation 580 of storing the aggregated privacy preserving prompt information in an anonymized prompts datastore 496a outside of the first secure computing environment and the second secure computing environment.

The detailed examples of systems, devices, and techniques described in connection with FIGS. 1-5C are presented herein for illustration of the disclosure and its benefits. Such examples of use should not be construed to be limitations on the logical process embodiments of the disclosure, nor should variations of user interface methods from those described herein be considered outside the scope of the present disclosure. It is understood that references to displaying or presenting an item (such as, but not limited to, presenting an image on a display device, presenting audio via one or more loudspeakers, and/or vibrating a device) include issuing instructions, commands, and/or signals causing, or reasonably expected to cause, a device or system to display or present the item. In some embodiments, various features described in FIGS. 1-5C are implemented in respective modules, which may also be referred to as, and/or include, logic, components, units, and/or mechanisms. Modules may constitute either software modules (for example, code embodied on a machine-readable medium) or hardware modules.

In some examples, a hardware module may be implemented mechanically, electronically, or with any suitable combination thereof. For example, a hardware module may include dedicated circuitry or logic that is configured to perform certain operations. For example, a hardware module may include a special-purpose processor, such as a field-programmable gate array (FPGA) or an Application Specific Integrated Circuit (ASIC). A hardware module may also include programmable logic or circuitry that is temporarily configured by software to perform certain operations and may include a portion of machine-readable medium data and/or instructions for such configuration. For example, a hardware module may include software encompassed within a programmable processor configured to execute a set of software instructions. It will be appreciated that the decision to implement a hardware module mechanically, in dedicated and permanently configured circuitry, or in temporarily configured circuitry (for example, configured by software) may be driven by cost, time, support, and engineering considerations.

Accordingly, the phrase "hardware module" should be understood to encompass a tangible entity capable of performing certain operations and may be configured or arranged in a certain physical manner, be that an entity that is physically constructed, permanently configured (for example, hardwired), and/or temporarily configured (for example, programmed) to operate in a certain manner or to perform certain operations described herein. As used herein, "hardware-implemented module" refers to a hardware module. Considering examples in which hardware modules are temporarily configured (for example, programmed), each of the hardware modules need not be configured or instantiated at any one instance in time. For example, where a hardware module includes a programmable processor configured by software to become a special-purpose processor, the programmable processor may be configured as respectively different special-purpose processors (for example, including different hardware modules) at different times. Software may accordingly configure a processor or processors, for example, to constitute a particular hardware module at one instance of time and to constitute a different hardware module at a different instance of time. A hardware module implemented using one or more processors may be referred to as being "processor implemented" or "computer implemented."

Hardware modules can provide information to, and receive information from, other hardware modules. Accordingly, the described hardware modules may be regarded as being communicatively coupled. Where multiple hardware modules exist contemporaneously, communications may be achieved through signal transmission (for example, over appropriate circuits and buses) between or among two or more of the hardware modules. In embodiments in which multiple hardware modules are configured or instantiated at different times, communications between such hardware modules may be achieved, for example, through the storage and retrieval of information in memory devices to which the multiple hardware modules have access. For example, one hardware module may perform an operation and store the output in a memory device, and another hardware module may then access the memory device to retrieve and process the stored output.

In some examples, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by, and/or among, multiple computers (as examples of machines including processors), with these operations being accessible via a network (for example, the Internet) and/or via one or more software interfaces (for example, an application program interface (API)). The performance of certain of the operations may be distributed among the processors, not only residing within a single machine, but deployed across several machines. Processors or processor-implemented modules may be in a single geographic location (for example, within a home or office environment, or a server farm), or may be distributed across multiple geographic locations.

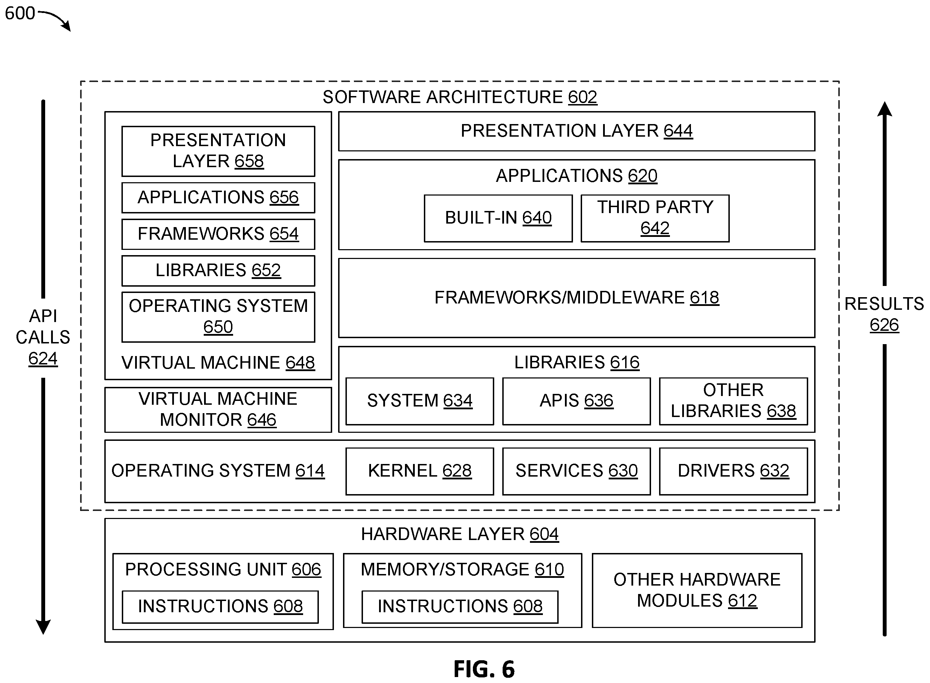

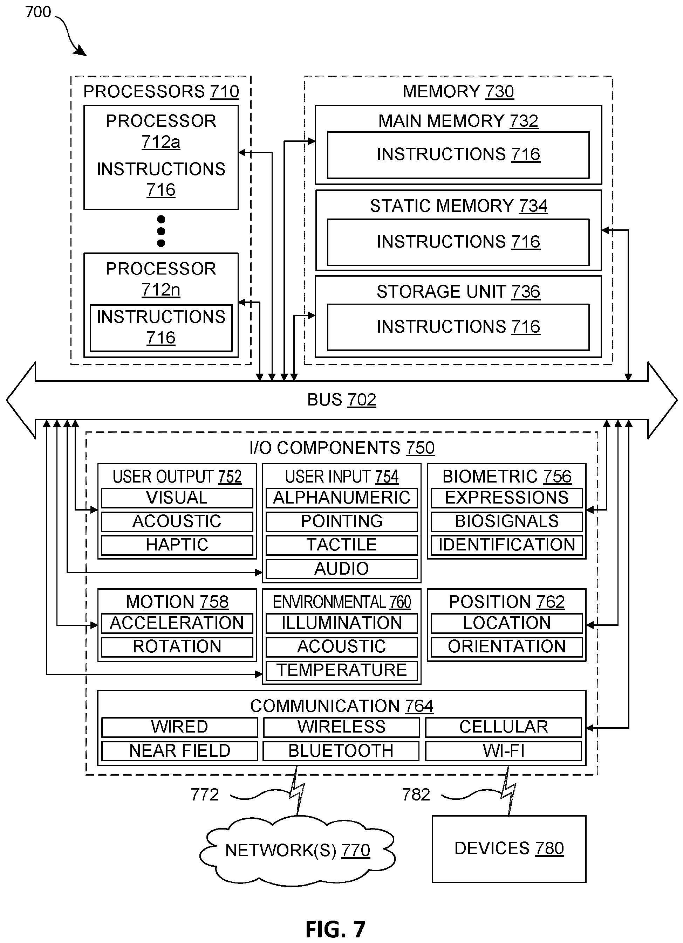

FIG. 6 is a block diagram 600 illustrating an example software architecture 602, various portions of which may be used in conjunction with various hardware architectures herein described, which may implement any of the above-described features. FIG. 6 is a non-limiting example of a software architecture, and it will be appreciated that many other architectures may be implemented to facilitate the functionality described herein. The software architecture 602 may execute on hardware such as a machine 700 of FIG. 7 that includes, among other things, processors 710, memory/storage, and input/output (I/O) components 750. A representative hardware layer 604 is illustrated and can represent, for example, the machine 700 of FIG. 7. The representative hardware layer 604 includes a processing unit 606 and associated executable instructions 608. The executable instructions 608 represent executable instructions of the software architecture 602, including implementation of the methods, modules and so forth described herein. The hardware layer 604 also includes a memory/storage 610, which also includes the executable instructions 608 and accompanying data. The hardware layer 604 may also include other hardware modules 612. Instructions 608 held by processing unit 606 may be portions of instructions 608 held by the memory/storage 610.

The example software architecture 602 may be conceptualized as layers, each providing various functionality. For example, the software architecture 602 may include layers and components such as an operating system (OS) 614, libraries 616, frameworks/middleware 618, applications 620, and a presentation layer 644. Operationally, the applications 620 and/or other components within the layers may invoke API calls 624 to other layers and receive corresponding results 626. The layers illustrated are representative in nature and other software architectures may include additional or different layers. For example, some mobile or special purpose operating systems may not provide the frameworks/middleware 618.

The OS 614 may manage hardware resources and provide common services. The OS 614 may include, for example, a kernel 628, services 630, and drivers 632. The kernel 628 may act as an abstraction layer between the hardware layer 604 and other software layers. For example, the kernel 628 may be responsible for memory management, processor management (for example, scheduling), component management, networking, security settings, and so on. The services 630 may provide other common services for the other software layers. The drivers 632 may be responsible for controlling or interfacing with the underlying hardware layer 604. For instance, the drivers 632 may include display drivers, camera drivers, memory/storage drivers, peripheral device drivers (for example, via Universal Serial Bus (USB)), network and/or wireless communication drivers, audio drivers, and so forth depending on the hardware and/or software configuration.

The libraries 616 may provide a common infrastructure that may be used by the applications 620 and/or other components and/or layers. The libraries 616 typically provide functionality for use by other software modules to perform tasks, rather than interacting directly with the OS 614. The libraries 616 may include system libraries 634 (for example, C standard library) that may provide functions such as memory allocation, string manipulation, file operations. In addition, the libraries 616 may include API libraries 636 such as media libraries (for example, supporting presentation and manipulation of image, sound, and/or video data formats), graphics libraries (for example, an OpenGL library for rendering 2D and 3D graphics on a display), database libraries (for example, SQLite or other relational database functions), and web libraries (for example, WebKit that may provide web browsing functionality). The libraries 616 may also include a wide variety of other libraries 638 to provide many functions for applications 620 and other software modules.

The frameworks/middleware 618 provide a higher-level common infrastructure that may be used by the applications 620 and/or other software modules. For example, the frameworks/middleware 618 may provide various graphic user interface (GUI) functions, high-level resource management, or high-level location services. The frameworks/middleware 618 may provide a broad spectrum of other APIs for applications 620 and/or other software modules.

The applications 620 include built-in applications 640 and/or third-party applications 642. Examples of built-in applications 640 may include, but are not limited to, a contacts application, a browser application, a location application, a media application, a messaging application, and/or a game application. Third-party applications 642 may include any applications developed by an entity other than the vendor of the particular platform. The applications 620 may use functions available via OS 614, libraries 616, frameworks/middleware 618, and presentation layer 644 to create user interfaces to interact with users.

Some software architectures use virtual machines, as illustrated by a virtual machine 648. The virtual machine 648 provides an execution environment where applications/modules can execute as if they were executing on a hardware machine (such as the machine 700 of FIG. 7, for example). The virtual machine 648 may be hosted by a host OS (for example, OS 614) or hypervisor, and may have a virtual machine monitor 646 which manages operation of the virtual machine 648 and interoperation with the host operating system. A software architecture, which may be different from software architecture 602 outside of the virtual machine, executes within the virtual machine 648 such as an OS 650, libraries 652, frameworks 654, applications 656, and/or a presentation layer 658.

FIG. 7 is a block diagram illustrating components of an example machine 700 configured to read instructions from a machine-readable medium (for example, a machine-readable storage medium) and perform any of the features described herein. The example machine 700 is in a form of a computer system, within which instructions 716 (for example, in the form of software components) for causing the machine 700 to perform any of the features described herein may be executed. As such, the instructions 716 may be used to implement modules or components described herein. The instructions 716 cause unprogrammed and/or unconfigured machine 700 to operate as a particular machine configured to carry out the described features. The machine 700 may be configured to operate as a standalone device or may be coupled (for example, networked) to other machines. In a networked deployment, the machine 700 may operate in the capacity of a server machine or a client machine in a server-client network environment, or as a node in a peer-to-peer or distributed network environment. Machine 700 may be embodied as, for example, a server computer, a client computer, a personal computer (PC), a tablet computer, a laptop computer, a netbook, a set-top box (STB), a gaming and/or entertainment system, a smart phone, a mobile device, a wearable device (for example, a smart watch), and an Internet of Things (IoT) device. Further, although only a single machine 700 is illustrated, the term "machine" includes a collection of machines that individually or jointly execute the instructions 716.

The machine 700 may include processors 710, memory/storage 730, and I/O components 750, which may be communicatively coupled via, for example, a bus 702. The bus 702 may include multiple buses coupling various elements of machine 700 via various bus technologies and protocols. In an example, the processors 710 (including, for example, a central processing unit (CPU), a graphics processing unit (GPU), a digital signal processor (DSP), an ASIC, or a suitable combination thereof) may include one or more processors 712a to 712n that may execute the instructions 716 and process data. In some examples, one or more processors 710 may execute instructions provided or identified by one or more other processors 710. The term "processor" includes a multicore processor including cores that may execute instructions contemporaneously. Although FIG. 7 shows multiple processors, the machine 700 may include a single processor with a single core, a single processor with multiple cores (for example, a multicore processor), multiple processors each with a single core, multiple processors each with multiple cores, or any combination thereof. In some examples, the machine 700 may include multiple processors distributed among multiple machines.

The memory/storage 730 may include a main memory 732, a static memory 734, or other memory, and a storage unit 736, both accessible to the processors 710 such as via the bus 702. The storage unit 736 and memory 732, 734 store instructions 716 embodying any one or more of the functions described herein. The memory/storage 730 may also store temporary, intermediate, and/or long-term data for processors 710. The instructions 716 may also reside, completely or partially, within the memory 732, 734, within the storage unit 736, within at least one of the processors 710 (for example, within a command buffer or cache memory), within memory at least one of I/O components 750, or any suitable combination thereof, during execution thereof. Accordingly, the memory 732, 734, the storage unit 736, memory in processors 710, and memory in I/O components 750 are examples of machine-readable media.

As used herein, "machine-readable medium" refers to a device able to temporarily or permanently store instructions and data that cause machine 700 to operate in a specific fashion, and may include, but is not limited to, random-access memory (RAM), read-only memory (ROM), buffer memory, flash memory, optical storage media, magnetic storage media and devices, cache memory, network-accessible or cloud storage, other types of storage and/or any suitable combination thereof. The term "machine-readable medium" applies to a single medium, or combination of multiple media, used to store instructions (for example, instructions 716) for execution by a machine 700 such that the instructions, when executed by one or more processors 710 of the machine 700, cause the machine 700 to perform and one or more of the features described herein. Accordingly, a "machine-readable medium" may refer to a single storage device, as well as "cloud-based" storage systems or storage networks that include multiple storage apparatus or devices. The term "machine-readable medium" excludes signals per se.

The I/O components 750 may include a wide variety of hardware components adapted to receive input, provide output, produce output, transmit information, exchange information, capture measurements, and so on. The specific I/O components 750 included in a particular machine will depend on the type and/or function of the machine. For example, mobile devices such as mobile phones may include a touch input device, whereas a headless server or IoT device may not include such a touch input device. The particular examples of I/O components illustrated in FIG. 7 are in no way limiting, and other types of components may be included in machine 700. The grouping of I/O components 750 are merely for simplifying this discussion, and the grouping is in no way limiting. In various examples, the I/O components 750 may include user output components 752 and user input components 754. User output components 752 may include, for example, display components for displaying information (for example, a liquid crystal display (LCD) or a projector), acoustic components (for example, speakers), haptic components (for example, a vibratory motor or force-feedback device), and/or other signal generators. User input components 754 may include, for example, alphanumeric input components (for example, a keyboard or a touch screen), pointing components (for example, a mouse device, a touchpad, or another pointing instrument), and/or tactile input components (for example, a physical button or a touch screen that provides location and/or force of touches or touch gestures) configured for receiving various user inputs, such as user commands and/or selections.

In some examples, the I/O components 750 may include biometric components 756, motion components 758, environmental components 760, and/or position components 762, among a wide array of other physical sensor components. The biometric components 756 may include, for example, components to detect body expressions (for example, facial expressions, vocal expressions, hand or body gestures, or eye tracking), measure biosignals (for example, heart rate or brain waves), and identify a person (for example, via voice-, retina-, fingerprint-, and/or facial-based identification). The motion components 758 may include, for example, acceleration sensors (for example, an accelerometer) and rotation sensors (for example, a gyroscope). The environmental components 760 may include, for example, illumination sensors, temperature sensors, humidity sensors, pressure sensors (for example, a barometer), acoustic sensors (for example, a microphone used to detect ambient noise), proximity sensors (for example, infrared sensing of nearby objects), and/or other components that may provide indications, measurements, or signals corresponding to a surrounding physical environment. The position components 762 may include, for example, location sensors (for example, a Global Position System (GPS) receiver), altitude sensors (for example, an air pressure sensor from which altitude may be derived), and/or orientation sensors (for example, magnetometers).

The I/O components 750 may include communication components 764, implementing a wide variety of technologies operable to couple the machine 700 to network(s) 770 and/or device(s) 780 via respective communicative couplings 772 and 782. The communication components 764 may include one or more network interface components or other suitable devices to interface with the network(s) 770. The communication components 764 may include, for example, components adapted to provide wired communication, wireless communication, cellular communication, Near Field Communication (NFC), Bluetooth communication, Wi-Fi, and/or communication via other modalities. The device(s) 780 may include other machines or various peripheral devices (for example, coupled via USB).

In some examples, the communication components 764 may detect identifiers or include components adapted to detect identifiers. For example, the communication components 764 may include Radio Frequency Identification (RFID) tag readers, NFC detectors, optical sensors (for example, one- or multi-dimensional bar codes, or other optical codes), and/or acoustic detectors (for example, microphones to identify tagged audio signals). In some examples, location information may be determined based on information from the communication components 764, such as, but not limited to, geo-location via Internet Protocol (IP) address, location via Wi-Fi, cellular, NFC, Bluetooth, or other wireless station identification and/or signal triangulation.

A data processing system implements obtaining user prompts s that include instructions to an AI application to perform one or more tasks; storing the user prompts in a prompts datastore in a secure computing environment; analyzing the user prompts using an LLM operating within the secure computing environment to generate normalized prompts based on the user prompts; extracting first n-grams from the normalized prompts using differentially private n-gram extraction that preserves user-level privacy; generating masked normalized prompts by comparing the normalized prompts with the first n-grams and replacing, with a placeholder n-gram, n-grams of the normalized prompts that do not match an n-gram of the first n-grams; extracting second n-grams from the masked normalized prompts using the differentially private n-gram extraction that preserves user-level privacy; outputting the second n-grams from the secure computing environment; and storing the second n-grams in an anonymized prompts datastore outside of the secure computing environment.

In an example there is provided a data processing system comprising: a processor; and a memory storing executable instructions that, when executed, cause the processor alone or in combination with other processors to perform operations of: obtaining user prompts submitted to an artificial intelligence (AI) application, wherein the user prompts comprise instructions to the AI application to perform one or more tasks, wherein each of the user prompts is associated with a customer identifier; storing the user prompts in a prompts datastore in a secure computing environment in which the user prompts are inaccessible from outside of the secure computing environment; analyzing the user prompts using a large language model (LLM) operating within the secure computing environment to generate normalized prompts based on the user prompts, the normalized prompts having a simplified format comprising words selected from among a fixed set of words; extracting first n-grams from the normalized prompts using differentially private n-gram extraction that preserves user-level privacy; generating masked normalized prompts by comparing the normalized prompts with the first n-grams and replacing, with a placeholder n-gram, n-grams of the normalized prompts that do not match an n-gram of the first n-grams; extracting second n-grams from the masked normalized prompts using the differentially private n-gram extraction that preserves user-level privacy; outputting the second n-grams from the secure computing environment; and storing the second n-grams in an anonymized prompts datastore outside of the secure computing environment.

In an example, extracting the first n-grams from the normalized prompts further comprises: aggregating the first n-grams based on the customer identifier associated with the user prompts from which the first n-grams were generated; and discarding, from the first n-grams, those n-grams having a frequency that does not satisfy a minimum frequency threshold.

In an example, extracting the second n-grams from the masked normalized prompts further comprises: aggregating the second n-grams based on the customer identifier associated with the user prompts from which the second n-grams were generated; and discarding, from the second n-grams, those n-grams having a frequency that does not satisfy a minimum frequency threshold.

In an example, the customer identifier identifies a unique collection of one or more individual users.

In an example, the memory further includes instructions configured to cause the processor alone or in combination with other processors to perform operations of: automatically deleting user prompts from the prompts datastore upon determining that an expiration date for the user prompts has been reached.

In an example, the memory further includes instructions configured to cause the processor alone or in combination with other processors to perform operations of: concatenating the second n-grams with third n-grams received from another data processing system to generate concatenated n-grams; and storing the concatenated n-grams in the anonymized prompts datastore outside of the secure computing environment.

In an example, there is provided a data processing system comprising: a processor; and a memory storing executable instructions that, when executed, cause the processor alone or in combination with other processors to perform operations of: obtaining user prompts submitted to an artificial intelligence (AI) application, wherein the user prompts comprise instructions to the AI application to perform one or more tasks, wherein each of the user prompts is associated with a customer identifier; storing the user prompts in a prompts datastore in a secure computing environment in which the user prompts are inaccessible from outside of the secure computing environment; analyzing the user prompts using a large language model (LLM) operating within the secure computing environment to generate normalized prompts based on the user prompts, the normalized prompts having a simplified format comprising words selected from among a fixed set of words; constructing a prompt to the LLM to generate candidate privacy preserving prompts, the prompt including desired attributes of the candidate privacy preserving prompts that have not been derived from the user prompts; providing the prompt to the LLM to obtain the candidate privacy preserving prompts; determining similarity metrics representing a closest candidate privacy preserving prompt for each of the normalized prompts; introducing calibrated noise into the similarity metrics to introduce differential privacy to the similarity metrics; selecting a predetermined number of candidate privacy preserving prompts that are most similar to the normalized prompts based on the similarity metrics; outputting the predetermined number of candidate privacy preserving prompts from the secure computing environment; and storing the candidate privacy preserving prompts in an anonymized prompts datastore outside of the secure computing environment.

In an example, the memory further includes instructions configured to cause the processor alone or in combination with other processors to, prior to outputting the predetermined number of candidate privacy preserving prompts, iteratively perform operations of: constructing a prompt to the LLM to analyze the selected candidate privacy preserving prompts to generate variations of each of the selected candidate privacy preserving prompts; determining seconds similarity metrics representing a closest candidate privacy preserving prompt for each of the variations; introducing calibrated noise into the second similarity metrics to introduce differential privacy to the second similarity metrics; selecting a predetermined number of variations that are most similar to the normalized prompts based on the similarity metrics; and outputting the predetermined number of variations as the selected candidate privacy preserving prompts.

In an example, the memory further includes instructions configured to cause the processor alone or in combination with other processors to perform operations of: determining a privacy loss associated with each iteration; and iteratively performing the determining of the similarity metrics, introducing the calibrated noise into the similarity metrics, and selecting the predetermined number of candidate privacy preserving prompts until a privacy loss threshold is satisfied.

In an example, determining similarity metrics further comprises: determining first embeddings providing a numerical representation of the normalized prompts; determining second embeddings providing a numerical representation of the candidate privacy preserving prompts; and comparing the first embeddings and the second embeddings to determine a distance between each of the normalized prompts and the candidate privacy preserving prompts.

In an example, the memory further includes instructions configured to cause the processor alone or in combination with other processors to perform operations of: generating a histogram representing the similarity metrics; and introducing Gaussian noise to each bin of the histogram.

In an example, the memory further includes instructions configured to cause the processor alone or in combination with other processors to perform operations of: automatically deleting user prompts from the prompts datastore upon determining that an expiration date for the user prompts has been reached.

In an example, the memory further includes instructions configured to cause the processor alone or in combination with other processors to perform operations of: concatenating the candidate privacy preserving prompts with second candidate privacy preserving prompts received from another data processing system to generate concatenated candidate privacy preserving prompts; and storing the concatenated candidate privacy preserving prompts in the anonymized prompts datastore.

In an example, there is provided a data processing system comprising: a processor; and a memory storing executable instructions that, when executed, cause the processor alone or in combination with other processors to perform operations of: obtaining first user prompts submitted to an artificial intelligence (AI) application, wherein the first user prompts comprise instructions to the AI application to perform one or more tasks; analyzing the first user prompts using a first privacy preserving analysis pipeline implemented in a first secure computing environment to obtain first privacy preserving prompt information; obtaining second privacy preserving prompt information from a second privacy preserving analysis pipeline implemented in a second secure computing environment in response to the second privacy preserving analysis pipeline analyzing second user prompts to the AI application; aggregating the first privacy preserving prompt information and the second privacy preserving prompt information to generate aggregated privacy preserving prompt information; and storing the aggregated privacy preserving prompt information in an anonymized prompts datastore outside of the first secure computing environment and the second secure computing environment.

In an example, the first secure computing environment is associated with a different tenant of the data processing system than the second secure computing environment.

In an example, the second secure computing environment implemented on a second data processing system that is located remotely from the data processing system, and wherein the second data processing system includes data that has different privacy restrictions imposed on the data stored and processed therein than then data processing system.

In an example, the memory further includes instructions configured to cause the processor alone or in combination with other processors to perform operations of: storing the first user prompts in a prompts datastore in the first secure computing environment in which the first user prompts are inaccessible from outside of the first secure computing environment, wherein each of the first user prompts is associated with a customer identifier; analyzing the first user prompts using a large language model (LLM) operating within the first secure computing environment to generate normalized prompts based on the first user prompts, the normalized prompts having a simplified format comprising words selected from among a fixed set of words; extracting first n-grams from the normalized prompts using differentially private n-gram extraction that preserves user-level privacy; generating masked normalized prompts by comparing the normalized prompts with the first n-grams and replacing, with a placeholder n-gram, n-grams of the normalized prompts that do not match an n-gram of the first n-grams; extracting second n-grams from the masked normalized prompts using the differentially private n-gram extraction that preserves user-level privacy; outputting the second n-grams from the first secure computing environment; aggregating the second n-grams to generate aggregated n-grams; and storing the aggregated n-grams as the aggregated privacy preserving prompt information in the anonymized prompts datastore outside of the first secure computing environment.

In an example, extracting the first n-grams from the normalized prompts further comprises: aggregating the first n-grams based on the customer identifier associated with the user prompts from which the first n-grams were generated; and discarding, from the first n-grams, those n-grams having a frequency that does not satisfy a minimum frequency threshold.

In an example, the memory further includes instructions configured to cause the processor alone or in combination with other processors to perform operations of: storing the first user prompts in a prompts datastore in the first secure computing environment in which the first user prompts are inaccessible from outside of the first secure computing environment, wherein each of the first user prompts is associated with a customer identifier; constructing a prompt to a large language model (LLM) operating the first secure computing environment to generate candidate privacy preserving prompts, the prompt including desired attributes of the candidate privacy preserving prompts that have not been derived from the first user prompts; providing the prompt to the LLM to obtain the candidate privacy preserving prompts; determining similarity metrics representing a closest candidate privacy preserving prompt for each of the first user prompts; introducing calibrated noise into the similarity metrics to introduce differential privacy to the similarity metrics; selecting a predetermined number of candidate privacy preserving prompts that are most similar to the first user prompts based on the similarity metrics; aggregating the candidate privacy preserving prompts to generate aggregated candidate privacy preserving prompts; and storing the aggregated candidate privacy preserving prompts as the aggregated privacy preserving prompt information in the anonymized prompts datastore outside of the first secure computing environment.

In an example, the memory further includes instructions configured to cause the processor alone or in combination with other processors to, prior to outputting the predetermined number of candidate privacy preserving prompts, iteratively perform operations of: constructing a prompt to the LLM to analyze the selected candidate privacy preserving prompts to generate variations of each of the selected candidate privacy preserving prompts; determining seconds similarity metrics representing a closest candidate privacy preserving prompt for each of the variations; introducing calibrated noise into the second similarity metrics to introduce differential privacy to the second similarity metrics; and selecting a predetermined number of variations that are most similar to the normalized prompts based on the similarity metrics; and outputting the predetermined number of variations as the selected candidate privacy preserving prompts.

In an example, there is provided a data processing system comprising: a processor; and a memory storing executable instructions that, when executed, cause the processor alone or in combination with other processors to perform operations of: obtaining first user prompts submitted to an artificial intelligence (AI) application, wherein the first user prompts comprise instructions to the AI application to perform one or more tasks; analyzing the first user prompts using a first anonymized prompts datastore implemented in a first secure computing environment to obtain first privacy preserving prompt information; obtaining second privacy preserving prompt information from a second anonymized prompts datastore implemented in a second secure computing environment in response to the second anonymized prompts datastore analyzing second user prompts to the AI application; aggregating the first privacy preserving prompt information and the second privacy preserving prompt information to generate aggregated privacy preserving prompt information; and storing the aggregated privacy preserving prompt information in an anonymized prompts datastore outside of the first secure computing environment and the second secure computing environment.

In an example, the first secure computing environment is associated with a different tenant of the data processing system than the second secure computing environment.

In an example, the second secure computing environment implemented on a second data processing system that is located remotely from the data processing system, and wherein the second data processing system includes data that has different privacy restrictions imposed on the data stored and processed therein than then data processing system.

In an example, the memory further includes instructions configured to cause the processor alone or in combination with other processors to perform operations of: storing the first user prompts in a prompts datastore in the first secure computing environment in which the first user prompts are inaccessible from outside of the first secure computing environment, wherein each of the first user prompts is associated with a customer identifier; analyzing the first user prompts using a large language model (LLM) operating within the first secure computing environment to generate normalized prompts based on the first user prompts, the normalized prompts having a simplified format comprising words selected from among a fixed set of words; extracting first n-grams from the normalized prompts using differentially private n-gram extraction that preserves user-level privacy; generating masked normalized prompts by comparing the normalized prompts with the first n-grams and replacing, with a placeholder n-gram, n-grams of the normalized prompts that do not match an n-gram of the first n-grams; extracting second n-grams from the masked normalized prompts using the differentially private n-gram extraction that preserves user-level privacy; outputting the second n-grams from the first secure computing environment; aggregating the second n-grams to generate aggregated n-grams; and storing the aggregated n-grams as the aggregated privacy preserving prompt information in the anonymized prompts datastore (196) outside of the first secure computing environment.

In an example, extracting the first n-grams from the normalized prompts further comprises: aggregating the first n-grams based on the customer identifier associated with the user prompts from which the first n-grams were generated; and discarding, from the first n-grams, those n-grams having a frequency that does not satisfy a minimum frequency threshold.

In an example, the memory further includes instructions configured to cause the processor alone or in combination with other processors to perform operations of: storing the first user prompts in a prompts datastore in the first secure computing environment in which the first user prompts are inaccessible from outside of the first secure computing environment, wherein each of the first user prompts is associated with a customer identifier; constructing a prompt to a large language model (LLM)operating the first secure computing environment to generate candidate privacy preserving prompts, the prompt including desired attributes of the candidate privacy preserving prompts that have not been derived from the first user prompts; providing the prompt to the LLM to obtain the candidate privacy preserving prompts; determining similarity metrics representing a closest candidate privacy preserving prompt for each of the first user prompts; introducing calibrated noise into the similarity metrics to introduce differential privacy to the similarity metrics; selecting a predetermined number of candidate privacy preserving prompts that are most similar to the first user prompts based on the similarity metrics; aggregating the candidate privacy preserving prompts to generate aggregated candidate privacy preserving prompts; and storing the aggregated candidate privacy preserving prompts as the aggregated privacy preserving prompt information in the anonymized prompts datastore outside of the first secure computing environment.

In an example, the memory further includes instructions configured to cause the processor alone or in combination with other processors to, prior to outputting the predetermined number of candidate privacy preserving prompts, iteratively perform operations of: constructing a prompt to the LLM to analyze the selected candidate privacy preserving prompts to generate variations of each of the selected candidate privacy preserving prompts; determining seconds similarity metrics representing a closest candidate privacy preserving prompt for each of the variations; introducing calibrated noise into the second similarity metrics to introduce differential privacy to the second similarity metrics; and selecting a predetermined number of variations that are most similar to the normalized prompts based on the similarity metrics; and outputting the predetermined number of variations as the selected candidate privacy preserving prompts.

In the preceding detailed description, numerous specific details are set forth by way of examples in order to provide a thorough understanding of the relevant teachings. However, it should be apparent that the present teachings may be practiced without such details. In other instances, well known methods, procedures, components, and/or circuitry have been described at a relatively high-level, without detail, in order to avoid unnecessarily obscuring aspects of the present teachings.

While various embodiments have been described, the description is intended to be exemplary, rather than limiting, and it is understood that many more embodiments and implementations are possible that are within the scope of the embodiments. Although many possible combinations of features are shown in the accompanying figures and discussed in this detailed description, many other combinations of the disclosed features are possible. Any feature of any embodiment may be used in combination with or substituted for any other feature or element in any other embodiment unless specifically restricted. Therefore, it will be understood that any of the features shown and/or discussed in the present disclosure may be implemented together in any suitable combination. Accordingly, the embodiments are not to be restricted except in light of the attached claims and their equivalents. Also, various modifications and changes may be made within the scope of the attached claims.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents. Notwithstanding, none of the claims are intended to embrace subject matter that fails to satisfy the requirement of Sections 101, 102, or 103 of the Patent Act, nor should they be interpreted in such a way. Any unintended embracement of such subject matter is hereby disclaimed.

Except as stated immediately above, nothing that has been stated or illustrated is intended or should be interpreted to cause a dedication of any component, step, feature, object, benefit, advantage, or equivalent to the public, regardless of whether it is or is not recited in the claims.

It will be understood that the terms and expressions used herein have the ordinary meaning as is accorded to such terms and expressions with respect to their corresponding respective areas of inquiry and study except where specific meanings have otherwise been set forth herein. Relational terms such as first and second and the like may be used solely to distinguish one entity or action from another without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a" or "an" does not, without further constraints, preclude the existence of additional identical elements in the process, method, article, or apparatus that comprises the element. Furthermore, subsequent limitations referring back to "said element" or "the element" performing certain functions signifies that "said element" or "the element" alone or in combination with additional identical elements in the process, method, article, or apparatus are capable of performing all of the recited functions.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various examples for the purpose of streamlining the disclosure. This method of disclosure is not to be interpreted as reflecting an intention that the claims require more features than are expressly recited in each claim. Rather, as the following claims reflect, inventive subject matter lies in less than all features of a single disclosed example. Thus, the following claims are hereby incorporated into the Detailed Description, with each claim standing on its own as a separately claimed subject matter.

## Claims

1. A data processing system comprising:
a processor; and
a memory storing executable instructions that, when executed, cause the processor alone or in combination with other processors to perform operations of:
obtaining user prompts submitted to an artificial intelligence (AI) application (120), wherein the user prompts comprise instructions to the AI application (120) to perform one or more tasks, wherein each of the user prompts is associated with a customer identifier;
storing the user prompts in a prompts datastore (202) in a secure computing environment in which the user prompts are inaccessible from outside of the secure computing environment;
analyzing the user prompts using a large language model (LLM) (212) operating within the secure computing environment to generate normalized prompts based on the user prompts, the normalized prompts having a simplified format comprising words selected from among a fixed set of words;
extracting first n-grams from the normalized prompts using differentially private n-gram extraction that preserves user-level privacy;
generating masked normalized prompts by comparing the normalized prompts with the first n-grams and replacing, with a placeholder n-gram, n-grams of the normalized prompts that do not match an n-gram of the first n-grams;
extracting second n-grams from the masked normalized prompts using the differentially private n-gram extraction that preserves user-level privacy;
outputting the second n-grams from the secure computing environment; and
storing the second n-grams in an anonymized prompts datastore (196) outside of the secure computing environment.

2. The data processing system of claim 1, wherein:
extracting the first n-grams from the normalized prompts further comprises aggregating the first n-grams based on the customer identifier associated with the user prompts from which the first n-grams were generated and discarding, from the first n-grams, those n-grams having a frequency that does not satisfy a minimum frequency threshold; or
extracting the second n-grams from the masked normalized prompts further comprises aggregating the second n-grams based on the customer identifier associated with the user prompts from which the second n-grams were generated and discarding, from the second n-grams, those n-grams having a frequency that does not satisfy a minimum frequency threshold.

3. The data processing system of any of claims 1 or 2, wherein the customer identifier identifies a unique collection of one or more individual users.

4. The data processing system of any of claims 1 to 3, wherein the memory further includes instructions configured to cause the processor alone or in combination with other processors to perform operations of:
automatically deleting user prompts from the prompts datastore (202) upon determining that an expiration date for the user prompts has been reached; or
concatenating the second n-grams with third n-grams received from another data processing system to generate concatenated n-grams; and storing the concatenated n-grams in the anonymized prompts datastore (196) outside of the secure computing environment.

5. A data processing system comprising:
a processor; and
a memory storing executable instructions that, when executed, cause the processor alone or in combination with other processors to perform operations of:
obtaining user prompts submitted to an artificial intelligence (AI) application (120), wherein the user prompts comprise instructions to the AI application (120) to perform one or more tasks, wherein each of the user prompts is associated with a customer identifier;
storing the user prompts in a prompts datastore (202) in a secure computing environment in which the user prompts are inaccessible from outside of the secure computing environment;
analyzing the user prompts using a large language model (LLM) operating within the secure computing environment to generate normalized prompts based on the user prompts, the normalized prompts having a simplified format comprising words selected from among a fixed set of words;
constructing a prompt to the LLM (212) to generate candidate privacy preserving prompts, the prompt including desired attributes of the candidate privacy preserving prompts that have not been derived from the user prompts;
providing the prompt to the LLM (212) to obtain the candidate privacy preserving prompts;
determining similarity metrics representing a closest candidate privacy preserving prompt for each of the normalized prompts;
introducing calibrated noise into the similarity metrics to introduce differential privacy to the similarity metrics;
selecting a predetermined number of candidate privacy preserving prompts that are most similar to the normalized prompts based on the similarity metrics;
outputting the predetermined number of candidate privacy preserving prompts from the secure computing environment; and
storing the candidate privacy preserving prompts in an anonymized prompts datastore (196) outside of the secure computing environment.

6. The data processing system of claim 5, prior to outputting the predetermined number of candidate privacy preserving prompts, iteratively performing operations of:
constructing a prompt to the LLM (212) to analyze the selected candidate privacy preserving prompts to generate variations of each of the selected candidate privacy preserving prompts;
determining seconds similarity metrics representing a closest candidate privacy preserving prompt for each of the variations;
introducing calibrated noise into the second similarity metrics to introduce differential privacy to the second similarity metrics;
selecting a predetermined number of variations that are most similar to the normalized prompts based on the similarity metrics; and
outputting the predetermined number of variations as the selected candidate privacy preserving prompts.

7. The data processing system of claim 6, wherein the memory further includes instructions configured to cause the processor alone or in combination with other processors to perform operations of:
determining a privacy loss associated with each iteration; and
iteratively performing the determining of the similarity metrics, introducing the calibrated noise into the similarity metrics, and selecting the predetermined number of candidate privacy preserving prompts until a privacy loss threshold is satisfied.

8. The data processing system of claim 6, wherein determining similarity metrics further comprises:
determining first embeddings providing a numerical representation of the normalized prompts;
determining second embeddings providing a numerical representation of the candidate privacy preserving prompts; and
comparing the first embeddings and the second embeddings to determine a distance between each of the normalized prompts and the candidate privacy preserving prompts;
and optionally, the memory further includes instructions configured to cause the processor alone or in combination with other processors to perform operations of:
generating a histogram representing the similarity metrics; and
introducing Gaussian noise to each bin of the histogram.

9. The data processing system of any of claims 5 to 8, wherein the memory further includes instructions configured to cause the processor alone or in combination with other processors to perform operations of:
automatically deleting user prompts from the prompts datastore (202) upon determining that an expiration date for the user prompts has been reached; or
concatenating the candidate privacy preserving prompts with second candidate privacy preserving prompts received from another data processing system to generate concatenated candidate privacy preserving prompts; and storing the concatenated candidate privacy preserving prompts in the anonymized prompts datastore (196).

10. A data processing system comprising:
a processor; and
a memory storing executable instructions that, when executed, cause the processor alone or in combination with other processors to perform operations of:
obtaining first user prompts submitted to an artificial intelligence (AI) application (120), wherein the first user prompts comprise instructions to the AI application (120) to perform one or more tasks;
analyzing the first user prompts using a first anonymized prompts datastore (492) implemented in a first secure computing environment to obtain first privacy preserving prompt information;
obtaining second privacy preserving prompt information from a second anonymized prompts datastore (492) implemented in a second secure computing environment in response to the second anonymized prompts datastore (492) analyzing second user prompts to the AI application (120);
aggregating the first privacy preserving prompt information and the second privacy preserving prompt information to generate aggregated privacy preserving prompt information; and
storing the aggregated privacy preserving prompt information in an anonymized prompts datastore (196) outside of the first secure computing environment and the second secure computing environment.

11. The data processing system of claim 10, wherein the first secure computing environment is associated with a different tenant of the data processing system than the second secure computing environment.

12. The data processing system of any of claims 10 or 11, wherein the second secure computing environment implemented on a second data processing system that is located remotely from the data processing system, and wherein the second data processing system includes data that has different privacy restrictions imposed on the data stored and processed therein than then data processing system.

13. The data processing system of any of claims 10 to 12, wherein the memory further includes instructions configured to cause the processor alone or in combination with other processors to perform operations of:
storing the first user prompts in a prompts datastore (202) in the first secure computing environment in which the first user prompts are inaccessible from outside of the first secure computing environment, wherein each of the first user prompts is associated with a customer identifier;
analyzing the first user prompts using a large language model (LLM) (212) operating within the first secure computing environment to generate normalized prompts based on the first user prompts, the normalized prompts having a simplified format comprising words selected from among a fixed set of words;
extracting first n-grams from the normalized prompts using differentially private n-gram extraction that preserves user-level privacy;
generating masked normalized prompts by comparing the normalized prompts with the first n-grams and replacing, with a placeholder n-gram, n-grams of the normalized prompts that do not match an n-gram of the first n-grams;
extracting second n-grams from the masked normalized prompts using the differentially private n-gram extraction that preserves user-level privacy;
outputting the second n-grams from the first secure computing environment;
aggregating the second n-grams to generate aggregated n-grams; and
storing the aggregated n-grams as the aggregated privacy preserving prompt information in the anonymized prompts datastore (196) outside of the first secure computing environment; and optionally, wherein extracting the first n-grams from the normalized prompts further comprises:
aggregating the first n-grams based on the customer identifier associated with the user prompts from which the first n-grams were generated; and
discarding, from the first n-grams, those n-grams having a frequency that does not satisfy a minimum frequency threshold.

14. The data processing system of any of claims 10 to 13, wherein the memory further includes instructions configured to cause the processor alone or in combination with other processors to perform operations of:
storing the first user prompts in a prompts datastore (202) in the first secure computing environment in which the first user prompts are inaccessible from outside of the first secure computing environment, wherein each of the first user prompts is associated with a customer identifier;
constructing a prompt to a large language model (LLM) (212) operating the first secure computing environment to generate candidate privacy preserving prompts, the prompt including desired attributes of the candidate privacy preserving prompts that have not been derived from the first user prompts;
providing the prompt to the LLM (212) to obtain the candidate privacy preserving prompts;
determining similarity metrics representing a closest candidate privacy preserving prompt for each of the first user prompts;
introducing calibrated noise into the similarity metrics to introduce differential privacy to the similarity metrics;
selecting a predetermined number of candidate privacy preserving prompts that are most similar to the first user prompts based on the similarity metrics;
aggregating the candidate privacy preserving prompts to generate aggregated candidate privacy preserving prompts; and
storing the aggregated candidate privacy preserving prompts as the aggregated privacy preserving prompt information in the anonymized prompts datastore (196) outside of the first secure computing environment.

15. The data processing system of claim 14, prior to outputting the predetermined number of candidate privacy preserving prompts, iteratively performing operations of:
constructing a prompt to the **LLM** (212) to analyze the selected candidate privacy preserving prompts to generate variations of each of the selected candidate privacy preserving prompts;
determining seconds similarity metrics representing a closest candidate privacy preserving prompt for each of the variations;
introducing calibrated noise into the second similarity metrics to introduce differential privacy to the second similarity metrics; and
selecting a predetermined number of variations that are most similar to the normalized prompts based on the similarity metrics; and
outputting the predetermined number of variations as the selected candidate privacy preserving prompts.
